# FASCICULE DE BREVET EUROPEEN

(11) **EP 1 014 162 B1**
(45) Date de publication et mention de la délivrance du brevet: **12.03.2003**
(21) Numéro de dépôt: 99403142.5
(22) Date de dépôt: 15.12.1999
(51) Int. Cl.: G02F 1/35, A61F 9/02

(54) **Procédé de limitation large bande d'un flux lumineux et détecteur basé sur cette méthode**
Verfahren zur breitbandigen Begrenzung eines Lichtstroms und Detektor basierend auf diesem Verfahren
Method for broadband limitation of a light flux and detector based on this method

(30) Priorité: 15.12.1998 FR 9815820
(43) Date de publication de la demande: 28.06.2000
(73) Titulaire: Etat Français représenté par le Délégué Général pour l' Armement, 00457 Armées (FR)
(72) Inventeur: Andrieux, Marc, 78100 Saint-Germain en Laye (FR); Lafonta, Fernande, 75014 Paris (FR); Riehl, Didier, 92120 Montrouge (FR); Vivien, Laurent, 75015 Paris (FR); Anglaret, Eric, 34070 Montpellier (FR); Bernier, Patrick, 34160 Castres (FR); Brunet, Monique, 34090 Montpellier (FR); Goze, Christophe, 34660 Cournonteral (FR); Journet, Catherine, 83500 La Seyne sur Mer (FR); Hache, Francois, 94800 Villejuif (FR)

(56) Documents cités:
- EP-A- 0 538 864
- EP-A- 0 679 610
- US-A- 5 280 169
- US-A- 5 391 329
- US-A- 5 698 175
- US-A- 5 741 442
- US-A- 5 805 326
- CAHILL P.A. AND ROHLFING C.M.: 'Theoretical Studies of Derivatized Buckyballs und Buckytubes' TETRAHEDRON vol. 52, no. 14, 01 Avril 1996, pages 5247 - 5256, XP004104275
- GOLBERG D. ET AL.: 'Nanotubes in boron nitride Laser heated at high pressure' APPLIED PHYSICS LETTERS vol. 69, no. 14, 30 Septembre 1996, pages 2045 - 2047, XP000610003

## Description

La présente invention concerne notamment le domaine des dispositifs ou systèmes dont le fonctionnement optique est modifié par changement des propriétés optiques du milieu les constituant et destinés notamment à la limitation de l'intensité lumineuse transmise par le système. Elle a plus particulièrement pour objet un procédé de limitation, large bande, du flux lumineux utilisable par exemple pour protéger un capteur optronique ou l'oeil contre l'agression d'un rayonnement intense, comme celui émis par un laser impulsionnel.

Le développement de sources lumineuses intenses, éventuellement impulsionnelles et accordables ou non en longueur d'ondes, a engendré le besoin de protéger les systèmes optiques, tels que l'oeil humain ou les détecteurs fonctionnant dans les domaines visible ou infrarouge, susceptibles d'être soumis à un rayonnement provenant d'une telle source.

Cette protection consiste à placer des moyens de limitation optique entre le système à protéger et la source, ces moyens devant préférentiellement avoir un bon coefficient de transmission dans le cas d'un rayonnement incident dont l'intensité n'est pas suffisante pour endommager le détecteur ou tout système d'observation et réagir immédiatement à un rayonnement incident de fort flux lumineux et susceptible d'endommager le détecteur. La réponse de la protection se traduit par une diminution du coefficient de transmission de sorte que le flux lumineux émergent de ces moyens de limitation optique soit insuffisant pour endommager le détecteur ou système d'observation.

Parmi tous les dispositifs aptes à atténuer un rayonnement et présentant tout ou partie des propriétés précitées des moyens de limitation optique, on peut en citer quatre types.

Le premier type de dispositif utilise des suspensions de particules de carbone pouvant se présenter sous la forme d'encre de chine fortement diluée dans un liquide. Ce type de dispositif transmet parfaitement la lumière ambiante mais ses propriétés optiques se modifient lorsqu'il est soumis à un rayonnement de très forte intensité, tel celui émis par un laser à impulsions, cette modification tendant à diminuer la transmission. Le flux lumineux à la sortie dudit dispositif est donc inférieur à celui de l'entrée.

Ce type de dispositif donne de bons résultats en matière de protection contre des flux lumineux de longueurs d'onde allant du visible au proche infrarouge, mais sa mise en oeuvre pose de nombreux problème tel celui de maintenir les particules de carbone en suspension.

Le deuxième type de dispositif concerne les filtres de Christiansen constitués par des petits morceaux de verre baignant dans un liquide dont l'indice de réfraction est choisi égal à celui du verre mais qui varie sous l'influence d'un rayonnement de forte intensité. Ainsi, ce dispositif est transparent au rayonnement de faible et moyenne intensité et devient diffusant lorsqu'un rayonnement de forte intensité le traverse.

Le flux lumineux à la sortie dudit dispositif est donc inférieur à celui de l'entrée.

Le troisième type concerne les filtres colloïdaux cristallins: il s'agit de particules en suspension dans un liquide et dont la particularité est de s'agencer suivant une structure cristalline.

Le liquide est choisi de telle manière que son indice de réfraction soit égal à celui des particules mais varie sous l'influence d'un rayonnement de forte intensité.

Ainsi, ce dispositif est transparent au rayonnement de faible et moyenne intensité et devient diffractant lorsqu'un rayonnement de forte intensité le traverse.

Les filtres de Christiansen et les filtres colloïdaux présentent un inconvénient majeur, en l'occurrence, ils sont spectralement sélectifs. En d'autres termes ces filtres n'ont lesdites propriétés précitées que pour une longueur d'onde ou pour un domaine restreint de longueurs d'onde. Ainsi ce type de filtre est par exemple inadapté pour protéger un dispositif optronique contre le rayonnement émis par un système laser accordable en longueur d'onde et impulsionnel.

Le quatrième est décrit dans le brevet EP538864 et concerne l'utilisation de fullerènes, comme le C60, pour limiter l'intensité de rayonnements visibles par effet d'absorption saturable inverse. Cependant, au-delà du rayonnement visible, par exemple à une longueur d'onde de 800nm, ce C60 n'est plus efficace et il est nécessaire, pour obtenir une bonne efficacité sur une gamme de longueurs d'ondes non limitée aux rayonnements visibles, de l'utiliser en combinaison avec des fullerènes d'ordre supérieur comme le C70 ou le C80. Or, la mise en oeuvre d'une telle combinaison de matériaux complexe et délicate car elle nécessite l'utilisation de solvants toxiques et donc la prise de mesures contraignantes pour assurer la sécurité de sa fabrication.

Le but de l'invention est de résoudre ces inconvénients en proposant un procédé utilisant un dispositif apte à transmettre un rayonnement incident de faible ou de moyenne intensité c'est-à-dire non susceptible d'endommager un système optique, tel un détecteur ou l'oeil humain, et d'atténuer immédiatement un rayonnement incident dont l'intensité est susceptible d'endommager ces mêmes moyens, et ce sur une gamme importante de longueurs d'ondes.

La solution apportée à ce procédé est l'utilisation d'un dispositif photoactivé de limitation du flux lumineux d'un rayonnement constitué par un milieu liquide ou solide contenant des nanotubes, par exemple des nanotubes de carbone ou de bore, de tungstène, de silicium ou de nanostructures composites telles que BN, BC3, BC2N, CN(C3N4), MoS2.

Selon une caractéristique particulière, le milieu comporte des nanotubes de carbone monofeuillets et/ou multifeuillets.

Ces nanotubes de carbone sont de type connu. Ils sont par exemple décrits dans le brevet US5698175 associés éventuellement à des groupes fonctionnels du type nitro-, sulfo-, carboxyl-, carbonyl-, ether-, phenolic hydroxyl. Ils peuvent être fabriqués par exemple avec un arc électrique ou par ablation laser ou avec un four solaire ou par voie chimique.

Selon une autre caractéristique particulière, le milieu est constitué par des nanotubes de carbone dopés ou fonctionnalisés par des entités chimiques choisies parmi l'iode, le krypton, l'argon, la fonction OH, des métaux ou des matériaux semi-conducteurs, ou des matériaux présentant des propriétés de non-linéarité optique.

Selon une caractéristique particulière les nanotubes de carbones sont en suspension dans un liquide ou incorporé dans un gel ou dans une matrice solide.

Selon une caractéristique additionnelle, la matrice solide est constituée par au moins un polymère, mésomorphe ou non, ou par un solgel, éventuellement en combinaison avec un cristal liquide.

Selon une caractéristique particulière, des moyens de génération, d'un champs électrique à fréquence variable et/ou d'un champs magnétique et/ou d'une induction sont associés audit milieu pour orienter les nanotubes.

Selon une autre caractéristique, des moyens de génération d'une induction sont associés à ladite matrice.

L'invention a aussi pour objet un détecteur du type comportant au moins un objectif et un élément sensible à un rayonnement Rs et comportant un dispositif de limitation d'un flux lumineux selon l'une quelconque des caractéristiques précitées.

Un dispositif utilisé selon l'invention permet d'atténuer le flux lumineux incident à partir d'un certain seuil. En effet, lorsque le flux lumineux est faible ou moyen, ce qui est le cas de la lumière ambiante, le milieu constitué par le milieu contenant les nanotubes apparaît comme un milieu transparent. Le flux lumineux incident Ri n'est alors pratiquement pas atténué car environ 80%, voire plus, de ce flux le traverse.

Lorsque le dispositif reçoit un flux lumineux de fort flux, le flux lumineux qui en ressort a un flux limité à une valeur compatible avec le fonctionnement normale d'un système optronique.

L'énergie lumineuse incidente active la protection lorsque ledit seuil est dépassé. Le milieu est donc autoactivé par le flux.

Lorsque le dispositif ne reçoit plus ledit flux lumineux de fort flux, il réapparaît comme un système transparent.

L'invention peut notamment être appliquée à des dispositifs optroniques comme par exemple une caméra ou un autodirecteur pour missile.

Un dispositif utilisé selon l'invention est large bande ; il fonctionne notamment dans le domaine du visible ainsi que dans celui du proche infrarouge.

D'autres avantages et caractéristiques apparaîtront dans la description d'un mode particulier de réalisation appliquée à un dispositif et au regard des figures annexées parmi lesquelles :
- les figures 1a et 1b schématisent le fonctionnement d'un dispositif selon l'invention appliqué à un détecteur,
- la figure 2 montre une courbe du flux lumineux émergent du dispositif selon l'invention en fonction du flux lumineux incident.

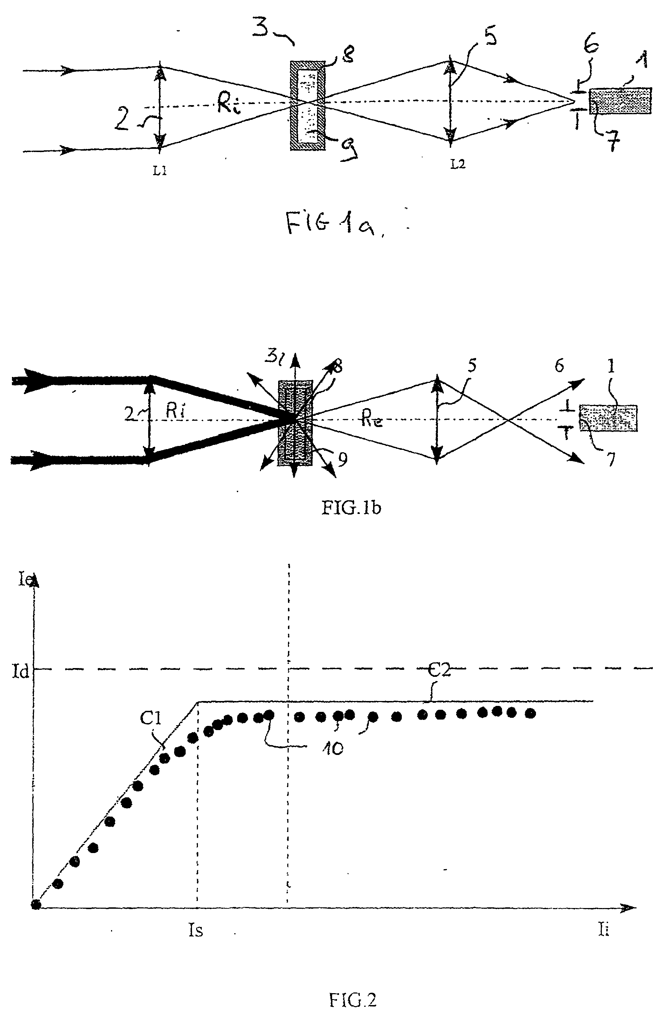

Les figures 1a et 1b présentent l'invention dans une application particulière à savoir celle d'un dispositif optronique.

Ce dispositif optronique comporte une caméra CCD 1 transmettant une image vidéo à des moyens de traitement aptes à déterminer la position d'une cible dans cette image.

Lorsqu'un flux lumineux intense, tel que celui émis par un laser accordable en fréquence et impulsionnel, est dirigé sur les éléments photosensibles de cette caméra, ces derniers se détériorent et la caméra devient inutilisable.

Pour éviter ces détériorations, l'optique d'imagerie de la caméra est adapté. Cette optique d'imagerie comporte une lentille convergente 2, un dispositif 3, selon l'invention, de limitation sélective du flux lumineux incident, et un objectif 5, 6 apte à former l'image optique du champs de vision filmé sur les éléments sensibles 7 de la caméra.

Le dispositif 3, situé dans un plan focal intermédiaire de l'optique d'imagerie, comporte une enveloppe 8 réalisée en matériau optiquement transparent aux fréquences d'émission d'un laser impulsionnel accordable en fréquence, enveloppe contenant un milieu 9 comportant des nanotubes de carbones fabriqués à partir d'une technique utilisant un arc électrique et en suspension dans un liquide.

Des nanotubes monofeuillets d'environ 13Å de diamètre et de longueur variant entre 0,3 et 300µm des nanotubes multifeuillets d'environ 100Å de diamètre et de quelques micromètre de longueur ont été réalisés.

Afin de montrer l'efficacité des nanotubes, ces derniers sont mis en suspension dans de l'eau qui, en tant que telle ne présente pas de comportement de limitation optique ; ainsi on peut considérer que l'efficacité de la limitation optique n'est due qu'aux nanotubes.

L'épaisseur du dispositif 3 de limitation du flux lumineux Ri est de 1mm. Elle correspond à la longueur du trajet optique du rayonnement Ri dans ce dispositif.

La figure 2 montre deux courbes, l'une C1;C2 correspondant à une modélisation et l'autre expérimentale et constituée par des cercles noircis 10, avec en abscisse l'intensité li du rayonnement incident Ri entrant dans le dispositif 3 de limitation du flux lumineux et en ordonnées, le flux lumineux émergent de ce dispositif. Ces courbes comportent deux parties distinctes. La première partie, correspondant aux valeurs de flux inférieures à la valeur seuil Is, montre une proportionnalité entre l'intensité li du rayonnement incident Ri et celle du flux lumineux émergent. Ce dispositif 3 de limitation optique assure une transmission linéaire supérieure à 80% sur l'ensemble du spectre visible et infrarouge jusqu'à une valeur seuil S de l'intensité du rayonnement incident. La deuxième partie correspondant à des valeurs de flux incident supérieures à la valeur seuil Is montre que pour toute valeur de l'intensité li du rayonnement incident Ri, la valeur du flux lumineux sortant reste sensiblement constante et inférieure à une valeur de l'intensité Id susceptible d'endommager la caméra, et ce quelle que soit la longueur d'onde du rayonnement incident.

Les nanotubes de carbones atténuent le rayonnement incident de forte intensité par réfraction non linéaire, diffusion non linéaire et absorption non-linéaire.

Le seuil d'activation, c'est à dire le seuil au-delà duquel le flux lumineux incident est limité, est sensiblement inférieur à celui des suspensions de noir de carbone aux longueurs d'onde de 532 nm et de 1064nm.

Il est à noter que ce seuil d'activation est sensiblement le même dans le domaine des longueurs d'onde visible et dans le proche infrarouge.

De nombreuses modifications peuvent être réalisées sans sortir du cadre de l'invention.

## Revendications

1. Procédé de limitation en intensité, large bande, d'un flux lumineux d'un rayonnement en deçà d'une valeur seuil Is, **caractérisé en ce qu'**il consiste à disposer sur ce rayonnement un dispositif photoactivé constitué par un milieu liquide ou solide contenant des nanotubes, par exemple des nanotubes de carbone ou de bore, de tungstène, de silicium ou de nanostructures composites telles que BN, BC3, BC2N, CN(C3N4), MoS2.

2. Procédé selon la revendication 1, **caractérisé en ce que** le milieu comporte des nanotubes de carbone monofeuillets et/ou multifeuillets.

3. Procédé selon la revendication 1, **caractérisé en ce que** le milieu est constitué par des nanotubes de carbone dopés ou fonctionnalisés par des entités chimiques choisies parmi l'iode, le krypton, l'argon, la fonction OH, des métaux ou des matériaux semi-conducteurs, ou des matériaux présentant des propriétés de non-linéarité optique.

4. Procédé selon l'une quelconque des revendications 1 à 3, **caractérisé en ce que** les nanotubes de carbones sont en suspension dans un liquide ou incorporés dans un gel ou dans une matrice solide.

5. Procédé selon la revendication 4, **caractérisé en ce que** la matrice solide est constituée par au moins un polymère, mésomorphe ou non, ou un solgel.

6. Procédé selon la revendication 5, **caractérisé en ce que** le solgel comporte en outre un cristal liquide.

7. Procédé pour protéger un système optique ou une partie de ce dernier contre un rayonnement susceptible de l'endommager, **caractérisé en ce qu'**il consiste à interposer, entre ce rayonnement et le système optique, un dispositif photoactivé constitué par un milieu liquide ou solide contenant des nanotubes, par exemple des nanotubes de carbone ou de bore, de tungstène, de silicium ou de nanostructures composites telles que BN, BC3, BC2N, CN(C3N4), MoS2.

8. Détecteur du type comportant au moins un objectif (5, 6, 7) et un élément(7) sensible à un rayonnement **caractérisé en ce qu'**il comporte un dispositif (3) photoactivé de limitation en intensité du flux lumineux constitué par un milieu liquide ou solide contenant des nanotubes, par exemple des nanotubes de carbone ou de bore, de tungstène, de silicium ou de nanostructures composites telles que BN, BC3, BC2N, CN(C3N4), MoS2.

9. Détecteur selon la revendication 8, **caractérisé en ce que** le milieu comporte des nanotubes de carbone monofeuillets et/ou multifeuillets.

10. Détecteur selon la revendication 8, **caractérisé en ce que** le milieu est constitué par des nanotubes de carbone dopés ou fonctionnalisés par des entités chimiques choisies parmi l'iode, le krypton, l'argon, la fonction OH, des métaux ou des matériaux semi-conducteurs, ou des matériaux présentant des propriétés de non-linéarité optique.

## Claims

1. Method for the broad-band intensity limitation of a luminous flux of a radiation below a threshold value Is, **characterized in that** it consists in placing in the path of this radiation a photoactivated device consisting of a liquid or solid medium containing nanotubes, for example nanotubes made of carbon, boron, tungsten or silicon, or of composite nanostructures such as BM, BC3, BC2N, CN(C3N4) or MOS2.

2. Method according to Claim 1, **characterized in that** the medium comprises single lamella and/or multi-lamella carbon nanotubes.

3. Method according to Claim 1, **characterized in that** the medium consists of carbon nanotubes doped or functionalized with chemical species chosen from iodine, krypton, argon, OH groups, semiconductor metals or materials, or materials with nonlinear optical properties.

4. Method according to any one of Claims 1 to 3, **characterized in that** the carbon nanotubes are suspended in a liquid or incorporated into a gel or into a solid matrix.

5. Method according to Claim 4, **characterized in that** the solid matrix consists of at least one mesomorphic or non-mesomorphic polymer, or a sol-gel.

6. Method according to Claim 5, **characterized in that** the sol-gel also comprises a liquid crystal.

7. Method for protecting an optical system or a part thereof against a radiation capable of damaging it, **characterized in that** it consists in placing, between this radiation and the optical system, a photoactivated device consisting of a liquid or solid medium containing nanotubes, for example nanotubes made of carbon, boron, tungsten or silicon, or of composite nanostructures such as BN, BC3, BC2N, CN(C3N4) or MoS2.

8. Detector of the type comprising at least one objective lens (5, 6, 7) and a radiation-sensitive component (7), **characterized in that** it comprises a photoactivated device (3) for limiting luminous flux intensity, consisting of a liquid or solid medium containing nanotubes, for example nanotubes made of carbon, boron, tungsten or silicon, or of composite nanostructures such as BN, BC3, BC2N, CN(C3N4) or MoS₂.

9. Detector according to Claim 8, **characterized in that** the medium comprises single lamella and/or multi-lamella carbon nanotubes.

10. Detector according to Claim 8, **characterized in that** the medium consists of carbon nanotubes doped or functionalized with chemical species chosen from iodine, krypton, argon, OH groups, semiconductor metals or materials, or materials with nonlinear optical properties.

## Patentansprüche

1. Verfahren zur breitbandigen Begrenzung der Stärke eines Lichtstroms einer Strahlung auf einen Wert unterhalb eines Schwellenwertes Is, **dadurch gekennzeichnet, daß** es darin besteht, in diese Strahlung eine photoaktivierte Vorrichtung einzusetzen, die aus einem flüssigen oder festen Medium gebildet ist, das Nanoröhren enthält, beispielsweise Nanoröhren aus Kohlenstoff oder Bor, aus Wolfram oder Silicium, oder Verbund-Nanostrukturen wie etwa BN, BC3, BC2N, CN(C3N4), MoS2.

2. Verfahren nach Anspruch 1, **dadurch gekennzeichnet, daß** das Medium Einzelblatt- und/oder Mehrblatt-Kohlenstoffnanoröhren umfaßt.

3. Verfahren nach Anspruch 1, **dadurch gekennzeichnet, daß** das Medium aus Kohlenstoffnanoröhren gebildet ist, die mit chemischen Entitäten dotiert oder funktionalisiert sind, die aus Jod, Krypton, Argon, der OH-Gruppe, Metallen oder Halbleitermaterialien oder Materialien, die nichlineare optische Eigenschaften besitzen, gewählt sind.

4. Verfahren nach einem der Ansprüche 1 bis 3, **dadurch gekennzeichnet, daß** die Kohlenstoffnanoröhren in Suspension in einer Flüssigkeit vorliegen oder in ein Gel oder in einen Festkörpergrundstoff eingebaut sind.

5. Verfahren nach Anspruch 4, **dadurch gekennzeichnet, daß** der Festkörpergrundstoff aus wenigstens einem Polymer, das mesomorph ist oder nicht, oder aus einem Sol-Gel gebildet ist.

6. Verfahren nach Anspruch 5, **dadurch gekennzeichnet, daß** das Sol-Gel außerdem einen Flüssigkristall enthält.

7. Verfahren zum Schützen eines optischen Systems oder eines Teils dieses letzteren vor einer Strahlung, die es beschädigen kann, **dadurch gekennzeichnet, daß** es darin besteht, zwischen diese Strahlung und das optische System eine photoaktivierte Vorrichtung einzusetzen, die durch ein flüssiges oder festes Medium gebildet ist, das Nanoröhren enthält, beispielsweise Nanoröhren aus Kohlenstoff oder Bor, Wolfram oder Silicium oder Verbund-Nanostrukturen wie etwa BN, BC3, BC2N, CN(C3N4), MoS2.

8. Detektor des Typs, der wenigstens ein Objektiv (5, 6, 7) und ein für eine Strahlung empfindliches Element (7) umfaßt, **dadurch gekennzeichnet, daß** er eine photoaktivierte Vorrichtung (3) für die Begrenzung der Stärke des Lichtstroms enthält, die durch ein flüssiges oder festes Medium gebildet ist, das Nanoröhren enthält, beispielsweise Nanoröhren aus Kohlenstoff oder Bor, Wolfram oder Silicium oder Verbund-Nanostrukturen wie etwa BN, BC3, BC2N, CN(C3N4), MoS2.

9. Detektor nach Anspruch 8, **dadurch gekennzeichnet, daß** das Medium Einzelblatt- und/oder Mehrblatt-Kohlenstoffnanoröhren umfaßt.

10. Detektor nach Anspruch 8, **dadurch gekennzeichnet, daß** das Medium aus Kohlenstoffnanoröhren gebildet ist, die durch chemische Entitäten dotiert oder funtionalisiert sind, die aus Jod, Krypton, Argon, der OH-Gruppe, Metallen oder Halbleitermaterialien oder Materialien, die nichtlineare optische Eigenschaften besitzen, gewählt sind.
